# EUROPÄISCHE PATENTSCHRIFT

(11) **EP 1 400 343 B1**
(45) Veröffentlichungstag und Bekanntmachung des Hinweises auf die Patenterteilung: **07.09.2005**
(21) Anmeldenummer: 03450168.4
(22) Anmeldetag: 10.07.2003
(51) Int. Cl.: B29D 30/54

(54) **Verfahren zur Vulkanisation für die Runderneuerung von Fahrzeugreifen**
Vulcanization method for retreading of vehicle tyres
Procédé de vulcanisation pour le rechapage de pneus de véhicules

(30) Priorität: 12.09.2002 AT 13642002
(43) Veröffentlichungstag der Anmeldung: 24.03.2004
(73) Patentinhaber: Edler, Kurt, A-8600 Bruck/Mur (AT)
(72) Erfinder: Edler, Kurt, A-8600 Bruck/Mur (AT)
(74) Vertreter: Atzwanger, Richard

(56) Entgegenhaltungen:
- EP-A- 0 832 733
- DE-A- 2 544 744
- DE-B- 1 120 117
- US-A- 4 175 991
- US-A- 4 234 369
- US-A- 4 720 313
- US-A- 6 056 852

## Beschreibung

Die gegenständliche Erfindung betrifft ein Verfahren zur Vulkanisation für die zur Runderneuerung von Fahrzeugreifen, insbesondere von Fahrzeugreifen für Schwerfahrzeuge, mittels eines Laufbelages, welcher als in sich geschlossener Ringkörper ausgebildet ist, welcher längs seines Außenumfanges mit einer durch Blöcke und zwischen diesen befindlichen Ausnehmungen gebildeten Profilierung versehen ist, welcher an seinen beiden Längsseiten mit sich keilförmig verjüngenden Fortsätzen ausgebildet ist, die an die Seitenflächen des Reifens zur Anlage kommen und welcher in den Bereichen der Fortsätze mit ringsumlaufenden, nach außen abragenden Rippen ausgebildet ist, mit einer Hülle, welche an den Reifen zur gegenüber dem Durchtritt von Luft abgedichtenen Anlage gebracht wird, wobei die Hülle an die Innenfläche des Reifens und an dessen Seitenwände angelegt wird.

Es ist bekannt, abgefahrene Reifen für Kraftfahrzeuge dadurch einer weiteren Verwendung zugänglich zu machen, dass auf deren Oberfläche ein neuer Laufbelag aufgebracht wird. Dieser Maßnahme liegt die Erkenntnis zugrunde, dass durch die Benützung von Reifen der Laufbelag infolge des Abriebes abgetragen wird, wodurch die Reifen nicht mehr die erforderliche Profilierung aufweisen, dass jedoch das den Laufbelag tragende Gewebe, die sogenannte Karkasse, unbeschädigt ist. Soferne demnach auf die unbeschädigte Karkasse eines Fahrzeugreifens ein neuer Laufbelag aufgebracht wird, wird hierdurch ein Reifen geschaffen, welcher den verkehrstechnischen Anforderungen voll entspricht.
Die Aufbringung eines neuen Laufbelages auf einen abgefahrenen Reifen, welche als Runderneuerung bezeichnet wird, ist insbesondere bei Reifen mit großen Durchmessern wirtschaftlich. Es sind dies Reifen für Lastfahrzeuge, für verfahrbare Maschinen, wie Erdbewegungsfahrzeuge, Bagger, Planierfahrzeuge u.dgl.

Eine Runderneuerung von Fahrzeugreifen erfolgt dadurch, dass ein abgefahrener Reifen abgeschliffen und aufgerauht wird. Hierauf wird auf die Oberfläche des Reifens eine Gummilösung aufgesprüht und wird auf diese eine Schichte eines Bindegummis, welcher für die Vulkanisation erforderlich ist, aufgebracht. Hierbei muß darauf geachtet werden, dass zwischen der Oberfläche des Reifens und dem Bindegummi keine Lufteinschlüsse verbleiben. In weiterer Folge wird auf den Reifen ein in sich geschlossener Ring eines neuen Laufbelages aufgebracht. Dies wird dadurch bewirkt, dass dieser ringförmige Laufbelag mittels einer mit Greifarmen ausgebildeten Streckeinrichtung so stark radial gedehnt wird, dass er über den mit der Schichte an Bindegummi versehenen Reifen gebracht werden kann. Hierauf werden die sich zwischen dem Reifen und dem ringförmigen Laufbelag befindlichen Greifarme der Streckeinrichtung seitlich herausgezogen, wodurch der Laufbelag auf die Oberfläche des Reifens zur Anlage kommt und den Reifen dicht umschließt. In weiterer Folge wird der mit dem neuen Laufbelag versehene Reifen in einem Autoklaven unter einem Druck von etwa 5 bar einer Temperatur von etwa 100°C ausgesetzt, wodurch der Bindegummi vulkanisiert wird. Hierdurch wird der neue Laufbelag mit der Karkasse des abgefahrenen Reifens dauerhaft verbunden.

Eine wesentliche Voraussetzung dafür, dass die erforderliche Verbindung des neuen Laufbelages mit der Karkasse erzielt wird, besteht darin, dass zwischen dem Bindegummi und dem ringförmigen Laufbelag keine Einschlüsse an Luft verbleiben, da andernfalls in den Bereichen von Lufteinschlüssen keine Verbindung des Laufbelages mit der Karkasse bewirkt wird. Derartige Lufteinschlüsse, aufgrund welcher runderneuerte Reifen den verkehrstechischen Anforderungen nicht entsprechen, müssen somit unbedingt vermieden werden.

Um einen Reifen für dessen Behandlung im Autoklaven zugänglich zu machen, ist es weiters bekannt, den mit dem Laufbelag versehenen Reifen vollständig mittels einer elastischen, luftdicht verschlossenen Hülle zu umgeben und den Innenraum der Hülle vor und während des Vulkanisiervorganges zu evakuieren.

Eine hierfür bekannte Hülle besteht aus zwei Teilen, welche längs ihrer jeweiligen beiden Seitenränder aneinander abdichtend zur Anlage gebracht werden, worauf der innerhalb der Hülle befindliche Raum evakuiert wird. Dabei dient ein erster Teil dieser Hülle dazu, an die Innenfläche des Reifens und an dessen äußere Seitenflächen zur Anlage gebracht zu werden und dient ein zweiter Teil der Hülle dazu, über die Profilierung des Laufbelages gelegt zu werden und die an den Seitenflächen des Reifens befindlichen Ränder des ersten Teiles der Hülle zu überdecken, wodurch die beiden Teile gegeneinander luftdicht abgeschlossen werden. Um den erforderlichen Luftabschluß zu erzielen, ist der erste Teil der Hülle längs seiner Seitenränder mit nach außen abragenden Leisten ausgebildet, auf welche die Seitenränder des zweiten Teiles der Hülle abdichtend zur Anlage kommen. Dieser Stand der Technik ist z.B. aus der DE-A1 2544744, der EP-A2 832733, der US-A 4175991 und der US-A 6056852 bekannt.

Eine derartige bekannte Hülle entspricht jedoch deshalb nicht den bestehenden Erfordernissen, da der zweite Teil derselben, welcher die Profilierung des Reifens umschließt, so hohen Belastungen ausgesetzt ist, dass er nach wenigen Einsätzen repariert oder ersetzt werden muß. Die Gründe hierfür liegen darin, dass die Hülle, welche gleichfalls aus einem gummiartigen Material hergestellt ist, im Autoklaven einer starken Erhitzung und einer großen Druckbeanspruchung unterliegt. Da der erste Teil der Hülle vollflächig an die Innenfläche des Reifens und an die Seitenwände des Reifens, welche nicht profiliert sind, anliegt, wird er über seine gesamte Fläche gegenüber der Druckbelastung abgestützt. Demgegenüber liegt jedoch der zweite Teil der Hülle an die Profilierung des Reifens an, wobei er nur durch die Blöcke des Profils abgestützt ist, wogegen die infolge der Evakuierung der Hülle auf den ersten Teil derselben wirkenden Belastungen zwischen den Blöcken von der Hülle aufgenommen werden müssen. Hierdurch wird jedoch der zweite Teil der Hülle so stark belastet, dass nach wenigen Einsätzen Brüche und Risse auftreten.

Ein weiterer Nachteil einer den gesamten Reifen umschließenden Hülle besteht auch darin, dass der zwischen dem Reifen und dem Laufbelag befindliche Bindegummi in den Bereichen der Blöcke des Profils wesentlich stärker einem Druck unterliegt, als der in den Bereichen zwischen den Blöcken befindliche Bindegummi, wodurch der unterhalb der Blöcke befindliche Bindegummi in die zwischen den Blöcken befindlichen Bereiche verdrängt wird, wodurch die Profilierung des Reifens und damit deren Wirkung deshalb in nachteiliger Weise verändert werden, da hierdurch die Tiefe der zwischen den Blöcken befindlichen Ausnehmungen vermindert wird.

Der gegenständlichen Erfindung liegt somit die Aufgabe zugrunde, ein Verfahren zu schaffen, durch welches die den bekannten Verfahren zur Vulkanisation für die Runderneuerung von Fahrzeugreifen anhaftenden Nachteile vermieden werden. Dies wird erfindungsgemäß dadurch erzielt, dass die Seitenränder der Hülle, welche den im Bereich der Fortsätze des Laufbelages befindlichen Rippen zugeordnet sind, an diese abdichtend zur Anlage gebracht werden, wodurch der Innenraum der Hülle durch den Laufbelag luftdicht abgeschlossen wird. Vorzugsweise sind der Hülle sich über den Laufbelag erstreckende Spannbänder od.dgl. zugeordnet. Weiters weisen vorzugsweise die Rippen des Laufbelages einen angenähert trapezförmigen Querschnitt auf, weisen weiters die Rippen zumindest eine Dicke auf, welche der Dicke des Laufbelages ohne Blöcke des Profils angenähert gleich ist und ist die Breite der Rippen angenähert gleich der Höhe der Blöcke des Profils.

Das erfindungsgemäße Verfahren ist nachstehend anhand eines in der Zeichnung dargestellten Ausführungsbeispieles näher erläutert. Es zeigen:
- Fig. 1: eine Hälfte eines Fahrzeugreifens und eines zugeordneten erfindungsgemäßen Laufbelages, in auseinandergezogener Darstellung;
- Fig.2: den Laufbelag, in axonometrischer und abgebrochener Darstellung;
- Fig.3: den Reifen in Richtung des Pfeiles III der Fig. 1 gesehen; und
- Fig.4: einen Fahrzeugreifen, auf welchen ein Laufbelag aufgebracht ist und welcher mit einer erfindungsgemäßen Einrichtung versehen ist, im Schnitt.

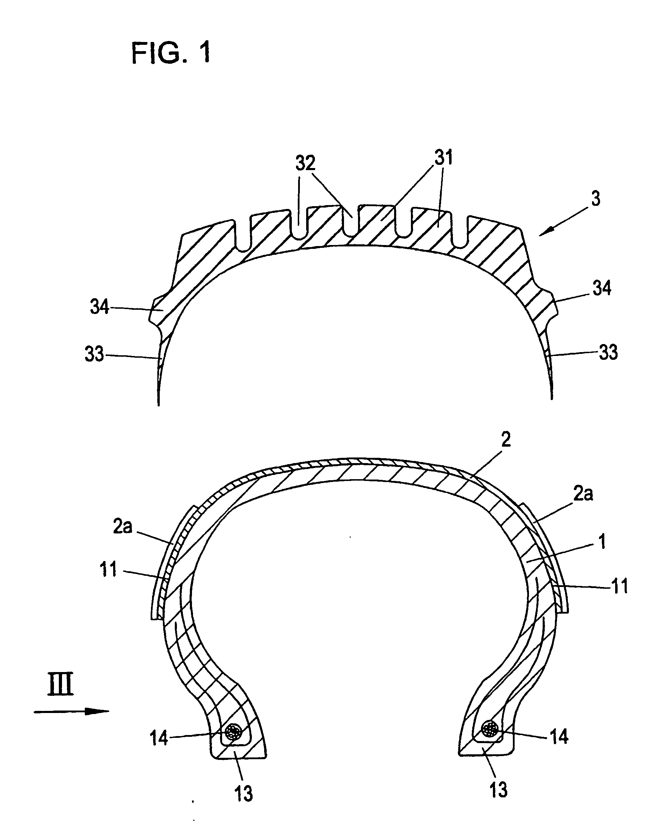

Der in Fig. 1 dargestellte Fahrzeugreifen, dessen obere Hälfte dargestellt ist, besteht aus einer an ihrer Oberseite abgeschliffenen und aufgerauhten Karkasse 1, auf deren Oberseite eine Schichte 2 eines Bindegummis aufgebracht ist und auf welche ein Laufstreifen 3 aufgebracht wird. Der Laufstreifen 3 weist eine Vielzahl von Blöcken 31 auf, zwischen welchen sich Ausnehmungen 32 befinden. An seinen beiden Seitenrändern ist der Laufstreifen 3 mit sich im Querschnitt keilförmig verjüngenden Fortsätzen 33 ausgebildet, welche an die Seitenwände 11 der Karkasse 1 zur Anlage kommen. Weiters ist der Laufstreifen 3 im Bereich der Fortsätze 33 mit jeweils einer nach außen abragenden Rippe 34 ausgebildet. Zudem sind in den Bereichen der Seitenwände 11 des Reifens 1 voneinander im Abstand befindliche Streifen 2a eines Bindegummis angeordnet. In den Bereichen seiner beiden Wülste 13 ist der Fahrzeugreifen mit durch Stahlkabel 14 gebildete Verstärkungen versehen.

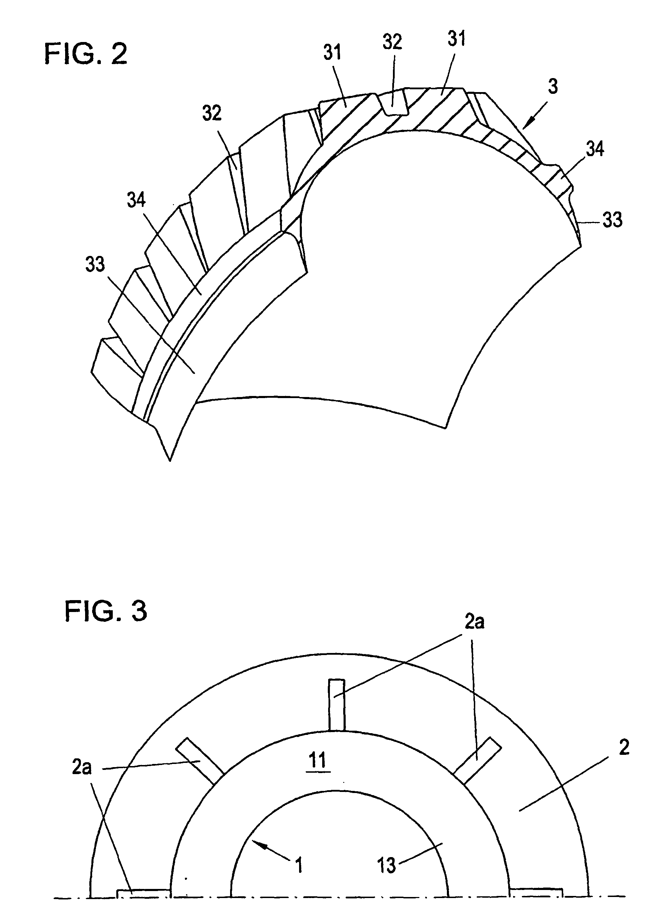

In Fig.2 ist der Laufstreifen 3 axonometrisch dargestellt und in Fig.3 ist der Reifen 1 gemäß Fig. in Seitenansicht dargestellt.

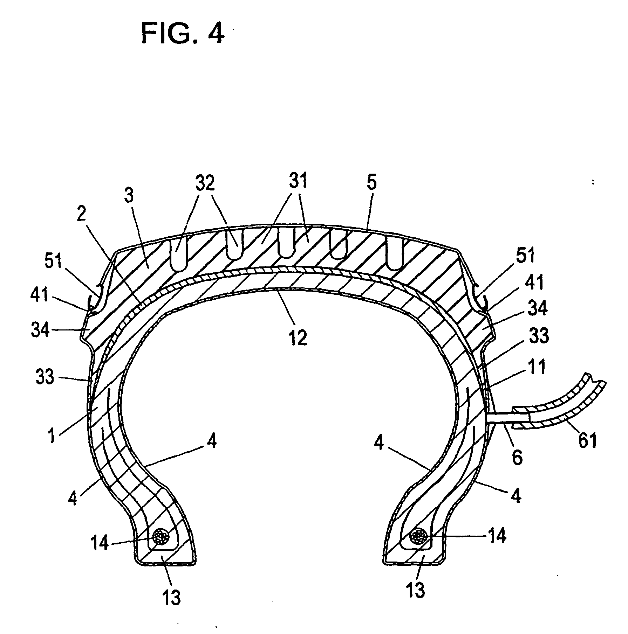

Wie dies aus Fig.4 ersichtlich ist, liegt an die Karkasse 1 eine Hülle 4 an, welche sich über die gesamte Innenfläche 12, weiters über die beiden Wülste13 des Fahrzeugreifens bis zu den Seitenwänden 11 erstreckt und welche an die Fortsätze 33 und an die beiden Rippen 34 des Laufstreifens 3 anliegt, wobei sie oberhalb der Rippen 34 endet. Zur Befestigung der Hülle 4 sind sich über den Laufstreifen 3 erstreckende Spannbänder 5 vorgesehen, welche mittels Haken 51 in Ösen 41 der Hülle 4 eingehängt sind. Zudem ist die Hülle 4 mit einem Ventil 6 ausgebildet, welches über eine Leitung 61 an eine Vakuumquelle angeschlossen ist.

Zur Runderneuerung eines Reifens wird die Karkasse 1 auf ihrer Oberseite abgeschliffen und aufgerauht. Hierauf wird auf die Karkasse 1 unter Zwischenlage der Schichte 2 und der Streifen 2a des Bindegummis der Laufstreifen 3 aufgebracht. In weiterer Folge wird die Karkasse 1 von der Hülle 4 umschlossen und werden deren beide Ränder mittels der Spannbänder 5 aneinander befestigt. Weiters wird mittels der Vakuumquelle die zwischen der Karkasse 1 und dem Laufbelag 3 befindliche Luft abgesaugt. Die innerhalb der Hülle 4 und des Laufstreifens 5 befindliche Luft wird dabei insbesondere durch die zwischen den Streifen 2a gebildeten Kanäle hindurch abgesaugt. Hierdurch werden der Laufbelag 3 und die Hülle 4 an den Reifen 1 angepreßt. Dessen ungeachtet ist es zweckmäßig, die beiden Seitenränder der Hülle 4 miteinander mittels Spannbändern 5 aneinander zu befestigen.

Hierdurch wird der Laufbelag 3 unter Zwischenlage der Schichte 2 und der Streifen 2a des Bindegummis an die Karkasse 1 angepreßt. Die erforderliche Abdichtung der Hülle 4 gegenüber dem Laufbelag 3 erfolgt mittels der Rippen 34, an welche die beiden Seitenränder 41 der Hülle 4 zur Anlage kommen. In weiterer Folge wird die mit dem Laufbelag 3 versehene Karkasse 1 in einen Autoklaven eingebracht, in welchem der Laufbelag 3 durch Vulkanisation der Schichte 2 und der Streifen 2a des Bindegummis an der Karkasse 1 befestigt wird.

Da bei diesem Verfahren deshalb kein zweiter Hüllenteil erforderlich ist, da dessen Funktion durch den Laufstreifen 3 erfüllt wird, welcher zur Abdichtung gegenüber der Hülle 4 mit den zwei seitlichen Rippen 34 ausgebildet ist, werden die durch den zweiten Hüllenteil bedingten Schwierigkeiten und Kosten vermieden. Die an den Seitenrändern vorgesehenen Rippen 34 dienen zudem beim runderneuerten Reifen in vorteilhafter Weise als Schutzleisten für die Seitenwände des Reifens gegenüber deren z.B. durch Steine verursachte Beschädigungen.

## Patentansprüche

1. Verfahren zur Vulkanisation für die Runderneuerung von Fahrzeugreifen, insbesondere von Fahrzeugreifen für Schwerfahrzeuge, mittels eines Laufbelages (3), welcher als in sich geschlossener Ringkörper ausgebildet ist, welcher längs seines Außenumfanges mit einer durch Blöcke (31) und zwischen diesen befindlichen Ausnehmungen (32) gebildetenen Profilierung versehen ist, welcher an seinen beiden Längsseiten mit sich keilförmig verjüngenden Fortsätzen (33) ausgebildet ist, die an die Seitenflächen (11) des Reifens zur Anlage kommen und welcher in den Bereichen der Fortsätze (33) mit ringsumlaufenden, nach außen abragenden Rippen (34) ausgebildet ist, mit einer Hülle (4), welche an den Reifen zur gegenüber dem Durchtritt von Luft abgedichteten Anlage gebracht wird, wobei die Hülle (4) an die Innenfläche (12) des Reifens und an dessen Seitenwände (11) angelegt wird, **dadurch gekennzeichnet, dass** die Seitenränder der Hülle (4), welche den im Bereich der Fortsätze (33) des Laufbelages (3) befindlichen Rippen (34) zugeordnet sind, an diese abdichtend zur Anlage gebracht werden, wodurch der Innenraum der Hülle (4) durch den Laufbelag (3) luftdicht abgeschlossen wird.

2. Verfahren nach Patentanspruch 1, **dadurch gekennzeichnet, dass** der Hülle (4) sich über den Laufbelag (3) erstreckende Spannbänder (5) zugeordnet werden.

3. Verfahren nach einem der Patentansprüche 1 und 2, **dadurch gekennzeichnet, dass** die Rippen (34) des Laufbelages (3) einen angenähert trapezförmigen Querschnitt aufweisen.

4. Verfahren nach einem der Patentansprüche 1 und 3, **dadurch gekennzeichnet, dass** die Rippen (34) des Laufbelages (3) zumindest eine Dicke aufweisen, welche der Dicke des Laufbelages ohne Blöcke (31) des Profils angenähert gleich ist.

5. Verfahren nach einem der Patentansprüche 1 bis 4, **dadurch gekennzeichnet, dass** die Breite der Rippen (34) des Laufbelages (3) angenähert gleich der Höhe der Blöcke (31) des Profils ist.

## Claims

1. A vulcanisation method for retreading vehicle tyres, in particular vehicle tyres for heavy vehicles, by means of a tread (3), which takes the form of a continuous annular member, which is provided around its outer circumference with a pattern formed of blocks (31) and slots (32) located therebetween, which is provided at its two longitudinal sides with extensions (33) tapering in the manner of a wedge, which extensions (33) come to rest against the side faces (11) of the tyre, and which is provided in the areas of the extensions (33) with circumferential, outwardly projecting ribs (34), having an envelope (4) which is brought to rest against the tyre in a manner providing a seal against the passage of air, said envelope (4) being applied against the inner surface (12) of the tyre and its side walls (11), **characterised in that** the side edges of the envelope (4), which are associated with the ribs (34) located in the area of the extensions (33) of the tread (3), are brought to rest sealingly thereagainst, whereby the inside of the envelope (4) is sealed in airtight manner by the tread (3).

2. A method according to claim 1, **characterised in that** tensioning straps (5) extending over the tread (3) are associated with the envelope (4).

3. A method according to either one of claims 1 and 2, **characterised in that** the ribs (34) of the tread (3) exhibit an approximately trapezoidal cross-section.

4. A method according to either one of claims 1 and 3, **characterised in that** the ribs (34) of the tread (3) exhibit at least a thickness which is approximately equal to the thickness of the tread without the blocks (31) of the pattern.

5. A method according to any one of claims 1 to 4, **characterised in that** the width of the ribs (34) of the tread (3) is approximately equal to the height of the blocks (31) of the pattern.

## Revendications

1. Procédé de vulcanisation pour le rechapage de pneus de véhicules, en particulier de pneus de véhicules lourds, à l'aide d'un revêtement de roulement (3) qui est conçu comme un corps annulaire fermé, qui est pourvu le long de sa circonférence extérieure d'un profil défini par des blocs (31) et par des creux (32) situés entre ceux-ci, qui présente sur ses deux côtés longitudinaux des prolongements effilés coniques (33) qui viennent s'appliquer contre les surfaces latérales (11) du pneu, et qui présente dans la zone des prolongements (33) des nervures (34) saillant vers l'extérieur, sur tout le tour, avec une gaine (4) qui est appliquée contre le pneu de manière étanche pour empêcher le passage de l'air, la gaine (4) étant posée sur la surface intérieure (12) du pneu et sur les parois latérales (11) de celui-ci, **caractérisé en ce que** les bords latéraux de la gaine (4) qui sont associés aux nervures (34) situées dans la zone des prolongements (33) du revêtement de roulement (3) sont appliqués de manière étanche contre ces prolongements, moyennant quoi l'intérieur de la gaine (4) est fermé de manière étanche à l'air grâce au revêtement de roulement (3).

2. Procédé selon la revendication 1, **caractérisé en ce que** des bandes de serrage (5) qui s'étendent sur le revêtement de roulement (3) sont associées à la gaine (4).

3. Procédé selon la revendication 1 ou 2, **caractérisé en ce que** les nervures (34) du revêtement de roulement (3) présentent une section transversale à peu près trapézoïdale.

4. Procédé selon l'une des revendications 1 à 3, **caractérisé en ce que** les nervures (34) du revêtement de roulement (3) présentent au moins une épaisseur qui est à peu près égale à l'épaisseur du revêtement de roulement sans les blocs (31) du profil.

5. Procédé selon l'une des revendications 1 à 4, **caractérisé en ce que** la largeur des nervures (34) du revêtement de roulement (3) est à peu près égale à la hauteur des blocs (31) du profil.
